(19) Europäisches Patentamt
European Patent Office
Office européen des brevets

(11) **EP 4 542 464 A1**

(12) **EUROPEAN PATENT APPLICATION**
published in accordance with Art. 153(4) EPC

(43) Date of publication:
**23.04.2025 Bulletin 2025/17**

(21) Application number: **22947833.4**

(22) Date of filing: **20.06.2022**

(51) International Patent Classification (IPC):
*G06N 20/00* *(2019.01)*

(52) Cooperative Patent Classification (CPC):
**G06N 20/00**

(86) International application number:
**PCT/JP2022/024445**

(87) International publication number:
**WO 2023/248267 (28.12.2023 Gazette 2023/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Carrier Japan Corporation
Tokyo 141-0032 (JP)**

(72) Inventor: **KOMURE Shinya
Fuji-shi, Shizuoka 416-8521 (JP)**

(74) Representative: **Gramm, Lins & Partner
Patent- und Rechtsanwälte PartGmbB
Frankfurter Straße 3c
38122 Braunschweig (DE)**

(54) **DETERMINATION DEVICE, DETERMINATION METHOD, AND DETERMINATION PROGRAM**

(57)　A determination device includes a model information storage unit (212), an information acquisition unit (231), a determination unit (233), and a correction unit (232). The model information storage unit stores a neural network model constructed with respect to operation of a second apparatus which operates according to a same operation principle as that of a first apparatus to be controlled, the second apparatus having a type different from the first apparatus. The information acquisition unit acquires: first item input data regarding an apparatus which operates according to the operation principle; a first coefficient for calculating second item output data from the first item input data on the first apparatus, and a second coefficient for calculating second item output data from the first item input data on the second apparatus. The determination unit determines the second item output data regarding the first apparatus, by using the neural network model, on the basis of the first item input data. The correction unit multiplies the first item input data or the second item output data, which is to be used by the determination unit, by a ratio of the first coefficient to the second coefficient, thereby correcting corresponding data.

FIG. 1

## Description

FIELD

Embodiments according to the present invention relate to a determination device, a determination method, and a determination program.

BACKGROUND

In recent years, with the development of IoT (Internet of Things) technology, it has become possible to collect enormous amounts of data in various fields. Accordingly, a technique has been developed in the industrial field to construct, using data collected with IoT technology, a neural network model (NN model) for determining information regarding operation of an apparatus.

In each apparatus, it is possible to use an NN model to accurately and efficiently determine information to be used for control and the like in consideration of a large amount of information regarding operation.

CITATION LIST

PATENT LITERATURE

PTL 1:JP 6791429 B1

SUMMARY

As described above, in order to construct an NN model, a large amount of data that is acquired when a corresponding apparatus is operated is required as learning data. As a technique to cope with a case where it is difficult to obtain a large amount of data when an apparatus is operated, a method has been proposed to reduce the amount of learning data for constructing a new NN model, by applying an existing NN model.

However, there has been an issue in that the method cannot be used for a new-product apparatus that has no track record before being put on the market because there is no data to be used as learning data.

**In** response to the above issue, it is an object of the present invention to provide a determination device, a determination method, and a determination program capable of determining, by using a neural network model, information regarding operation of an apparatus that has no track record.

**In** response to the above issue, a determination device according to the present invention includes: a model information storage unit configured to store a neural network model constructed with respect to operation of a second apparatus which operates according to a same operation principle as that of a first apparatus to be controlled, the second apparatus having a type different from the first apparatus; an information acquisition unit configured to acquire: first item input data regarding an apparatus which operates according to the operation principle; a first coefficient for calculating second item output data from the first item input data on the first apparatus, and a second coefficient for calculating second item output data from the first item input data on the second apparatus, a determination unit configured to determine the second item output data regarding the first apparatus, by using the neural network model stored in the model information storage unit, on the basis of the first item input data, and a correction unit configured to multiply the first item input data or the second item output data, which is to be used by the determination unit, by a ratio of the first coefficient to the second coefficient, thereby correcting corresponding data.

A determination method according to the present invention includes storing a neural network model constructed with respect to operation of a second apparatus that operates according to a same operation principle as that of a first apparatus to be controlled and has a type different from that of the first apparatus, acquiring: first item input data regarding a device which operates according to the operation principle; a first coefficient for calculating second item output data from the first item input data on the first apparatus, and a second coefficient for calculating second item output data from the first item input data on the second apparatus, and performing correction by multiplying the first item input data by a ratio of the first coefficient to the second coefficient, and determining the second item output data regarding the first apparatus by using the neural network model on the basis of the first item input data corrected; or determining the second item output data by using the neural network model on the basis of the first item input data, and then performing correction by multiplying the second item output data determined by the ratio of the first coefficient to the second coefficient so as to correspond to the first apparatus.

A determination program according to the present invention causes a computer to execute a function for storing a neural network model constructed with respect to operation of a second apparatus which operates according to a same operation principle as that of a first apparatus to be controlled, and which has a type different from that of the first apparatus, a function for acquiring: first item input data regarding an apparatus which operates according to the operation principle; a first coefficient for calculating second item output data from the first item input data on the first apparatus, and a second coefficient for calculating second item output data from the first item input data on the second apparatus, and a function for performing correction by multiplying the first item input data by a ratio of the first coefficient to the second coefficient, and determining the second item output data regarding the first apparatus by using the neural network model on the basis of the first item input data corrected; or determining the second item output data by using the neural network model on the basis of the first item input data, and then performing correction by multiplying the second item output data determined by the ratio of the first coefficient to the second coefficient so as to correspond to the first apparatus.

BRIEF DESCRIPTION OF THE DRAWINGS

[FIG. 1] FIG. 1 is a block diagram illustrating a configuration of an air conditioner using a first controller as a determination device according to a first embodiment of the present invention.
[FIG. 2] FIG. 2 is a block diagram illustrating a configuration of an air conditioner corresponding to a neural network model used in determination devices according to the first and second embodiments of the present invention.
[FIG. 3] FIG. 3 is a flowchart illustrating a process flow executed by the first controller as the determination device according to the first embodiment of the present invention.
[FIG. 4] FIG. 4 is a block diagram illustrating a configuration of an air conditioner using a third controller as the determination device according to the second embodiment of the present invention.
[FIG. 5] FIG. 5 is a flowchart illustrating a process flow executed by the third controller as the determination device according to the second embodiment of the present invention.

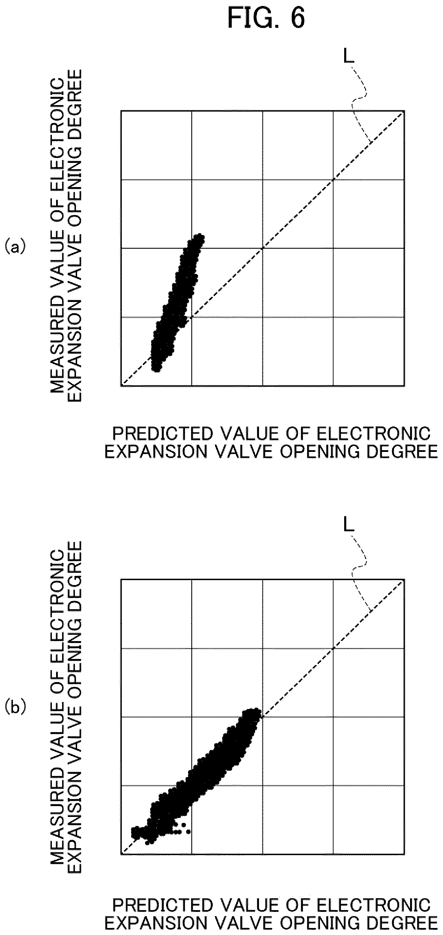

[FIG. 6] FIG. 6(a) is a graph illustrating, as a set of points, positions indicating a state where a determined predicted value of an electronic expansion valve opening degree, determined without data correction using a neural network model constructed for operation of an air conditioner of a type having a track record, corresponds to a predicted value of the electronic expansion valve opening degree actually measured on an air conditioner of a type to be verified, with respect to various operating conditions, and FIG. 6(b) is a graph illustrating, as a set of points, positions indicating a state where a determined predicted value of an electronic expansion valve opening degree, determined with data correction using a neural network model constructed for operation of an air conditioner of a type having a track record, corresponds to a predicted value of the electronic expansion valve opening degree which has been actually measured on an air conditioner of a type to be verified, with respect to various operating conditions.

DETAILED DESCRIPTION

<<First Embodiment>>

A description will be made of an air conditioner using a determination device according to a first embodiment of the present invention. In the first embodiment, in a first-type air conditioner that is a newly developed first apparatus having no track record, the apparatus in the air conditioner is operated using a neural network model (NN model) already constructed regarding operation of a second-type air conditioner that is a second apparatus having a track record.

<Configuration of Air Conditioner Using Determination Device According to First Embodiment>

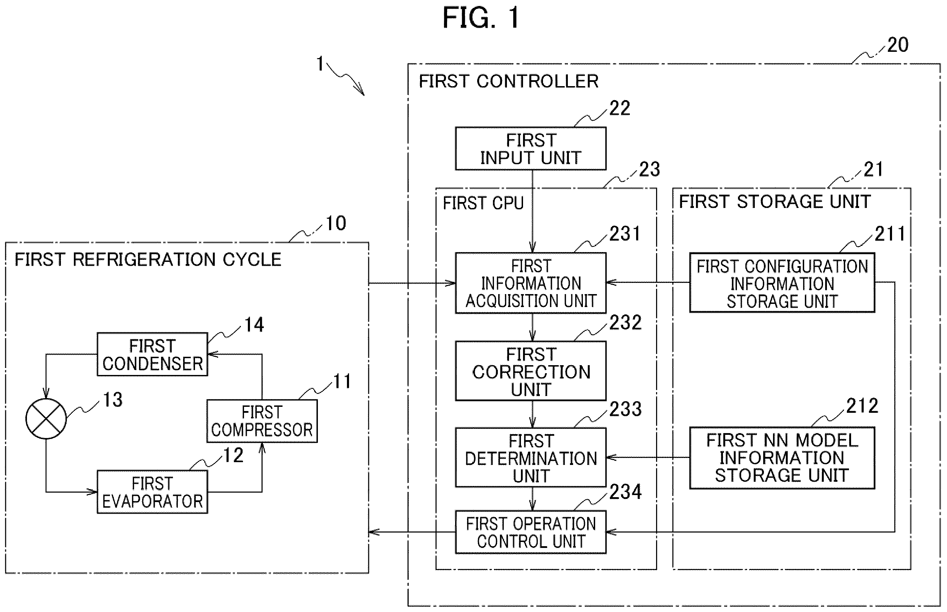

The configuration of the air conditioner using the determination device according to the first embodiment of the present invention will be described with reference to FIG. 1. An air conditioner 1 according to the present embodiment is the first-type air conditioner, which has been newly developed and has no track record.
The air conditioner 1 includes a first compressor 11, a first evaporator 12, a first electronic expansion valve 13, and a first condenser 14 that make up a first refrigeration cycle 10, and a first controller 20 as a determination device.
The first compressor 11 takes in refrigerant, compresses the refrigerant, and discharges it in a high-temperature and high-pressure state. The high-temperature and high-pressure refrigerant discharged from the first compressor 11 is made to radiate heat to be condensed through heat exchange in the first condenser 14. The condensed refrigerant is reduced in pressure by using the first electronic expansion valve 13 to enter a low-temperature and low-pressure state. The low-temperature and low-pressure refrigerant is made to absorb heat to be evaporated through heat exchange in the first evaporator 12. The refrigerant gasified through evaporation is returned to the first compressor 11 via an accumulator not illustrated.
The first controller 20 includes a first storage unit 21, a first input unit 22, and a first CPU 23, and controls each of the apparatuses 11, 12, 13, and 14 in the first refrigeration cycle 10. The first storage unit 21 has a first configuration information storage unit 211, and a first NN model information storage unit 212.
The first configuration information storage unit 211 stores configuration information regarding each of the apparatuses 11, 12, 13, and 14.
The first NN model information storage unit 212 stores an NN model M that has already been constructed by learning operation data, regarding a refrigeration cycle to be used in the second-type air conditioner, which has a track record.
The NN model M is information constructed by performing machine learning with a neural network on the basis of various data that is collected using IoT technology from each second-type air conditioner apparatus when the second-type air conditioner is operated. The neural network used for constructing the NN model M includes three layers: an input layer, an intermediate layer, and an output layer. The configuration of the second-type air conditioner will be described below.
The first input unit 22 inputs an instruction regarding operation of the apparatuses 11, 12, 13, and 14 in the first refrigeration cycle 10, and information to be used in a process corresponding to the instruction. Specifically, the first input unit 22 inputs first item input data regarding operation of the apparatuses in the first refrigeration cycle 10, and an instruction for outputting second item output data regarding operation of the apparatus in the first refrigeration cycle 10 on the basis of the first item input data. The first input unit 22 also inputs a second coefficient for calculating second item output data by using the first item of the first item, regarding a refrigeration cycle to be used in the second-type air conditioner, as information to be used in a process corresponding to the instruction.

The first CPU 23 includes a first information acquisition unit 231, a first correction unit 232, a first determination unit 233, and a first operation control unit 234.

The first information acquisition unit 231 acquires an instruction inputted through the first input unit 22, and information to be used in a process corresponding to the instruction. The first information acquisition unit 231 acquires information to be used in a process corresponding to the acquired instruction, from information stored in the first configuration information storage unit 211.

The first correction unit 232 multiplies the first item input data regarding operation of the first refrigeration cycle 10 acquired by the first information acquisition unit 231, by the ratio of a first coefficient to the second coefficient, thereby correcting the corresponding first item input data.

The first determination unit 233 determines the second item output data regarding operation of the first refrigeration cycle 10, by using the NN model M, on the basis of the first item input data corrected by the first correction unit 232.

The first operation control unit 234 controls operation of the apparatus 11, 12, 13, or 14 in the first refrigeration cycle 10 on the basis of the second item output data regarding the first refrigeration cycle 10 determined by the first determination unit 233, and information stored in the first configuration information storage unit 211.

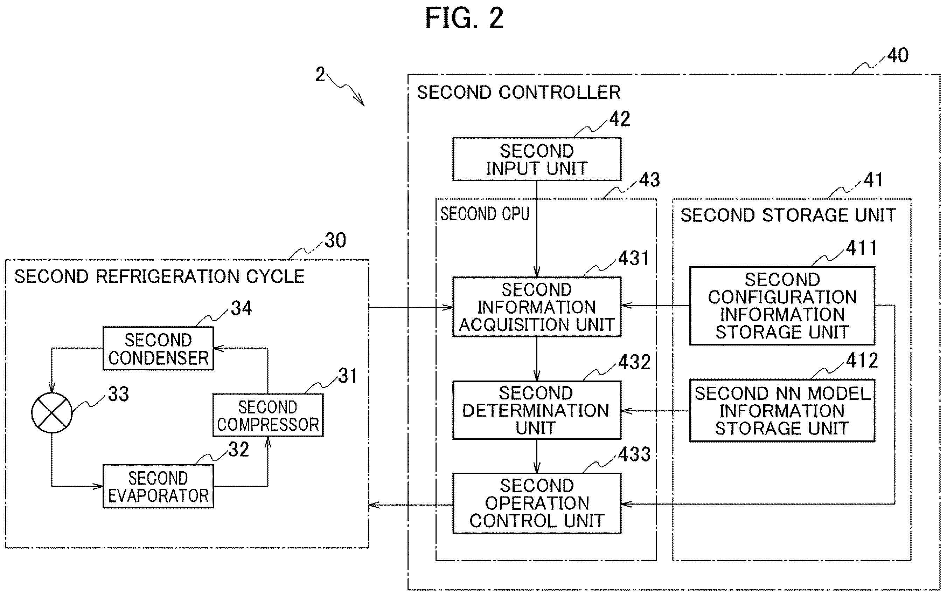

Next, the configuration of the second-type air conditioner will be described with reference to FIG. 2. The air conditioner 2 of the second type operates according to the same operation principle as that of the air conditioner 1 of the first type, but components used are different.

The air conditioner 2 includes a second compressor 31, a second evaporator 32, a second electronic expansion valve 33, and a second condenser 34 that make up a second refrigeration cycle 30, and a second controller 40. Since functions of the apparatuses 31, 32, 33, and 34, making up the second refrigeration cycle 30, are the same as those of the apparatuses 11, 12, 13, and 14, making up the first refrigeration cycle 10, detailed descriptions thereof will be omitted.

The second controller 40 includes a second storage unit 41, a second input unit 42, and a second CPU 43, and controls each of the apparatuses 31, 32, 33, and 34 in the second refrigeration cycle 30. The second storage unit 41 includes a second configuration information storage unit 411, and a second NN model information storage unit 412.

The second configuration information storage unit 411 stores configuration information regarding each of the apparatuses 31, 32, 33, and 34 in the second refrigeration cycle 30. The second NN model information storage unit 412 stores the above-described NN model M.

The second input unit 42 inputs an instruction regarding operation of the apparatuses 31, 32, 33, and 34 in the second refrigeration cycle 30, and information to be used in a process corresponding to the instruction. Specifically, the second input unit 42 inputs first item input data regarding operation of the apparatuses in the second refrigeration cycle 30, and an instruction for outputting second item output data regarding operation of the apparatus in the second refrigeration cycle 30, on the basis of the first item input data.

The second CPU 43 includes a second information acquisition unit 431, a second determination unit 432, and a second operation control unit 433.

The second information acquisition unit 431 acquires an instruction inputted through the second input unit 42, and information to be used in a process corresponding to the instruction. The second information acquisition unit 431 acquires information to be used in a process corresponding to the acquired instruction, from information stored in the second configuration information storage unit 411.

The second determination unit 432 determines the second item output data regarding operation of the second refrigeration cycle 30, by using the NN model M, on the basis of the first item input data acquired by the second information acquisition unit 431.

The second operation control unit 433 controls operation of the apparatus 31, 32, 33, or 34 in the second refrigeration cycle 30 on the basis of the second item output data regarding the second refrigeration cycle 30 determined by the second determination unit 432, and information stored in the second configuration information storage unit 411.

<Operation of Air Conditioner Using Determination Device According to First Embodiment>

Operation of the air conditioner 1 according to the present embodiment will be described below. Here, the operation of the air conditioner 1 will be described using a regression model as an example, where an operating frequency (compressor frequency Hz) of a motor used by the first compressor 11 in the first refrigeration cycle 10, and a specific volume of intake gas of the first compressor 11 (compressor intake gas specific volume v), which are the first item input data, are used as explanatory variables, and a refrigerant circulation amount G in the first refrigeration cycle 10, which is the second item output data, is used as an objective variable.

The air conditioner 1 of the first type, which has no track record, and the air conditioner 2 of the second type, which has a track record, operate according to the same operation principle, a refrigerant type is the same, and exclusion volumes set for the compressors 11 and 31 in the refrigeration cycles 10 and 30 are different. Since the air conditioner 1 and the air conditioner 2 have the same operation principle, it is presumed that logic for determining the refrigerant circulation amount G by using a compressor frequency Hz and the compressor intake gas specific volume v is approximate.

Specifically, it is considered that a refrigerant circulation amount $G_1$ [kg/s] in the first refrigeration cycle 10 is expressed by an equation where a compressor frequency Hz [1/s] and the compressor intake gas specific volume v [m³/kg] are used, and an exclusion volume $V_1$ [m³] is set as a coefficient, as illustrated in the following equation (1). It is also considered that a refrigerant circulation amount $G_2$ [kg/s] in the second refrigeration cycle 30 is expressed by an equation where a compressor frequency Hz [1/s] and the compressor intake gas specific volume v [m³/kg] are used, and an exclusion volume $V_2$ [m³] is set as a coefficient, as illustrated in the following equation (2).

[Math. 1]

$$G_1 = V_1 / v \times Hz \quad (1)$$

$$G_2 = V_2 / v \times Hz \quad (2)$$

In the present embodiment, information on the exclusion volume $V_1$ set in the first compressor 11 is stored in the first configuration information storage unit 211. Further, information on the exclusion volume $V_2$ set in the second compressor 31 is stored in the second configuration information storage unit 411.

Here, since the first refrigeration cycle 10 has no track record, an NN model cannot be constructed. Thus, it is considered that the NN model M constructed for the second refrigeration cycle 30, which operates on the same operation principle as the first refrigeration cycle 10, is applied for operation of the apparatuses in the first refrigeration cycle 10.

In this case, since the NN model M is constructed on the basis of operating characteristics of the air conditioner 2, it cannot be used directly as it is to determine operation of the first refrigeration cycle 10 of the air conditioner 1. Specifically, since exclusion volumes set for the first compressor 11 of the first refrigeration cycle 10 and the second compressor 31 of the second refrigeration cycle 30 are different, if the NN model M is used as it is, the refrigerant circulation amount $G_1$ of the first refrigeration cycle 10 cannot be appropriately determined from a compressor frequency Hz and the compressor intake gas specific volume v.

Thus, the first controller 20 corrects one type of data used for calculating the refrigerant circulation amount $G_1$, thereby performing a process for appropriately determining the refrigerant circulation amount $G_1$ of the first refrigeration cycle 10 using the NN model M.

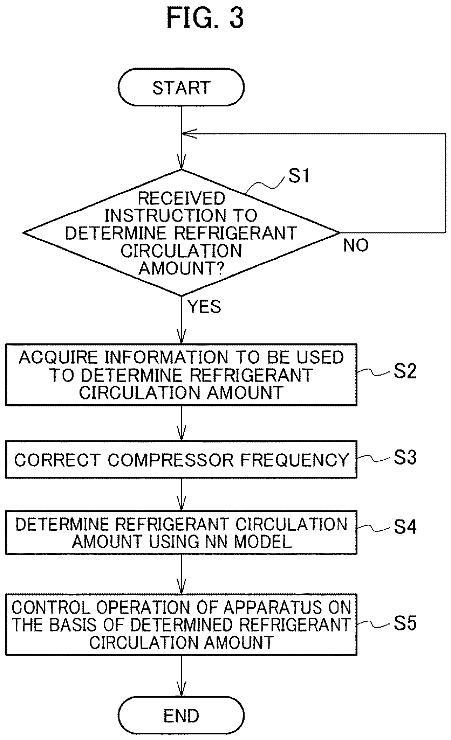

The following describes a process where the first controller 20 corrects a compressor frequency Hz, which is one type of first item input data regarding operation of the first refrigeration cycle 10, and determines the refrigerant circulation amount $G_1$ related to the first refrigeration cycle 10, using the NN model M. FIG. 3 is a flowchart illustrating a flow of processing executed by the first controller 20.

First, the first input unit 22 inputs an instruction for determining the refrigerant circulation amount $G_1$. At this time, the first input unit 22 inputs information on a compressor frequency Hz and the compressor intake gas specific volume v, which are first item input data, as explanatory variables to be given to the NN model M for determining the refrigerant circulation amount $G_1$. The first input unit 22 inputs correction target information indicating that data to be corrected, when the NN model M is applied, is the compressor frequency Hz, and information on the exclusion volume $V_2$ of the second compressor 31 to be used for a correction process of the compressor frequency Hz.

The information inputted through the first input unit 22 is acquired by the first information acquisition unit 231. When acquiring an instruction for determining the refrigerant circulation amount $G_1$ of the first refrigeration cycle 10 ("YES" in S1), the first information acquisition unit 231 acquires, as information to be used in a determination process, information on the compressor frequency Hz and the compressor intake gas specific volume v, which are first item input data, acquired together with the instruction, information on the exclusion volume $V_2$ of the second compressor 31, and information on the exclusion volume $V_1$ of the first compressor 11 stored in the first configuration information storage unit 211 (S2).

As described above, when a refrigerant circulation amount is determined from a compressor frequency and a compressor intake gas specific volume, an exclusion volume is predicted to be a coefficient. That is, in the NN model M, it is considered that a refrigerant circulation amount is determined by multiplying input data represented by the compressor frequency and the compressor intake gas specific volume, which are input data, by a value corresponding to the exclusion volume. Although the exclusion volume differs between the first compressor 11 and the second compressor 31, a value corresponding to the exclusion volume cannot be corrected in the NN model M because it is processed in a black box of an intermediate layer.

Therefore, on the basis of the correction target information acquired by the first information acquisition unit 231, the first correction unit 232 corrects the compressor frequency Hz to a compressor frequency Hzi by multiplying the compressor frequency Hz by the ratio of the exclusion volume $V_1$ of the first compressor 11 and the exclusion volume $V_2$ of the second compressor 31, as illustrated in the following equation (3) (S3).
[Math. 2]

$$Hz_1 = Hz \times V_1 / V_2 \quad (3)$$

The first determination unit 233 gives the compressor frequency $Hz_1$ corrected by the first correction unit 232, and the compressor intake gas specific volume v acquired by the first information acquisition unit 231, to an input layer of the neural network as explanatory variables. Then, the first determination unit 233 determines an objective variable outputted by using the NN model M on the basis of the given explanatory variables, as the refrigerant circulation amount $G_1$ of the first refrigeration cycle 10 (S4). Since the NN model M used here corresponds to the second refrigeration cycle 30, the refrigerant circulation amount $G_1$ to be determined is expressed as the upper line of the following equation (4) using information on the exclusion volume $V_2$ of the second compressor 31.
[Math. 3]

$$G_1 = V_2 / v \times Hz_1$$
$$= V_2 / v \times Hz \times V_1 / V_2 = V_1 / v \times Hz \quad (4)$$

The refrigerant circulation amount $G_1$ can be converted as illustrated in the lower line of the above equation (4). That is, the first determination unit 233 can determine the refrigerant circulation amount $G_1$ of the first refrigeration cycle 10 corresponding to the exclusion volume $V_1$ of the first compressor 11, by using a correction value $Hz_1$ of the compressor frequency with the NN model M.

The first operation control unit 234 controls operation of the apparatus 11, 12, 13, or 14 in the first refrigeration cycle 10 on the basis of the refrigerant circulation amount $G_1$ determined by the first determination unit 233, and various configuration information stored in the first configuration information storage unit 211 (S5).

According to the first embodiment described above, information to be used for operation of a first-type air conditioner which has no track record can be accurately determined by correcting input data using an NN model already constructed for a second-type air conditioner which has a track record.

The above-mentioned determination process describes a case where the first CPU 23 corrects the compressor frequency Hz, which is one type of first item input data, and determines the refrigerant circulation amount $G_1$ on the basis of: the correction value $Hz_1$ of the compressor frequency Hz; and the inputted compressor intake gas specific volume v. However, the process is not limited thereto, and the compressor intake gas specific volume v, which is type one of first item input data, may be similarly corrected, and the refrigerant circulation amount $G_1$ may be determined on the basis of: the correction value of the compressor intake gas specific volume v; and the inputted compressor frequency Hz.

<<Second Embodiment>>

An air conditioner using a determination device according to a second embodiment of the present invention will be described. In the second embodiment, in a newly developed third-type air conditioner having no track record, apparatuses in the air conditioner is controlled using an NN model already constructed for control of a second-type air conditioner having a track record.

<Configuration of Air Conditioner Using Determination Device According to Second Embodiment>

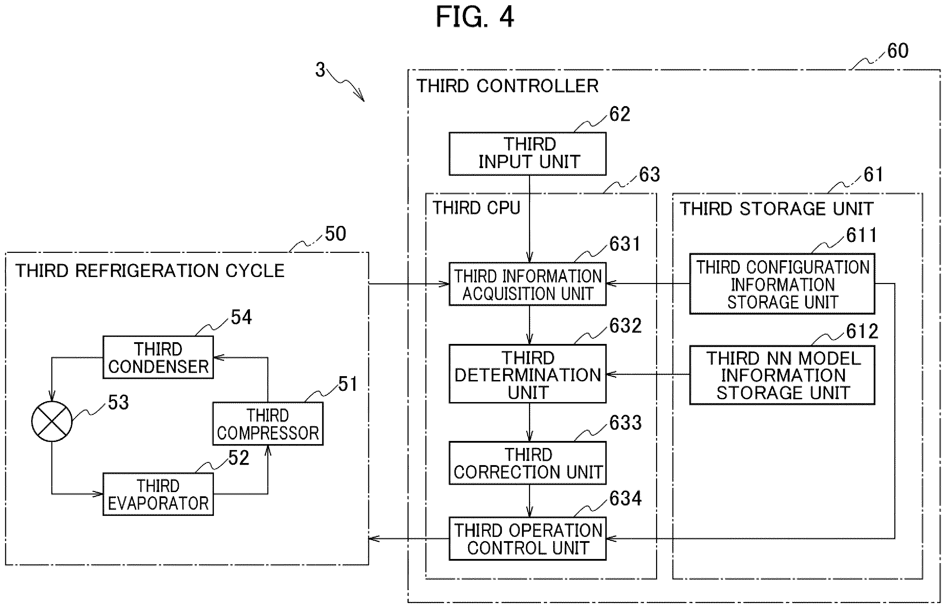

The configuration of the air conditioner using the determination device according to the second embodiment of the present invention will be described with reference to FIG. 4. An air conditioner 3 according to the present embodiment is a third-type air conditioner which has been newly developed and has no track record.

The air conditioner 3 includes a third compressor 51, a third evaporator 52, a third electronic expansion valve 53, and a third condenser 54 that make up a third refrigeration cycle 50, and a third controller 60 as the determination device. Since functions of the apparatuses 51, 52, 53, and 54, making up the third refrigeration cycle 50, are the same as those of the apparatuses 11, 12, 13, and 14 described in the first embodiment, detailed descriptions thereof will be omitted.

The third controller 60 includes a third storage unit 61, a third input unit 62, and a third CPU 63, and controls the apparatuses 51, 52, 53, and 54 in the third refrigeration cycle 50. The third storage unit 61 includes a third configuration information storage unit 611, and a third NN model information storage unit 612.

The third configuration information storage unit 611 stores configuration information regarding the apparatuses 51, 52, 53, and 54 in the third refrigeration cycle 50. The third NN model information storage unit 612 stores the NN model M described above.

The third input unit 62 inputs an instruction regarding operation of the apparatuses 51, 52, 53, and 54 in the third refrigeration cycle 50, and information to be used in a process corresponding to the instruction. Specifically, the third input unit 62 inputs first item input data regarding operation of the apparatuses in the third refrigeration cycle 50, and an instruction for outputting second item output data regarding operation of the apparatuses in the third refrigeration cycle 50, by using the first item input data.

The third CPU 63 includes a third information acquisition unit 631, a third determination unit 632, a third correction unit 633, and a third operation control unit 634.

The third information acquisition unit 631 acquires an instruction inputted through the third input unit 62, and information to be used in a process corresponding to the instruction. The third information acquisition unit 631 acquires information to be used in a process corresponding to the acquired instruction, from information stored in the third configuration information storage unit 611.

The third determination unit 632 determines the second item output data using the NN model M, from the first item input data acquired by the third information acquisition unit 631.

The third correction unit 633 multiplies the second item output data determined by the third determination unit 632, by the ratio of the first coefficient to the second coefficient, thereby correcting the corresponding second item output data so as to correspond to the third refrigeration cycle 50.

The third operation control unit 634 controls operation of the apparatus 51, 52, 53, or 54 in the third refrigeration cycle 50 on the basis of the second item output data regarding the third refrigeration cycle 50 corrected by the third determination unit 632, and information stored in the second configuration information storage unit 411.

<Operation of Air Conditioner Using Determination Device According to Second Embodiment>

Operation of the air conditioner 3 according to the present embodiment will be described using a regression model as an example, where a compressor frequency Hz used by the third compressor 51 in the third refrigeration cycle 50, and the compressor intake gas specific volume v of the third compressor 51 are used as explanatory variables, and a refrigerant circulation amount $G_3$ in the third refrigeration cycle 50 is used as an objective variable.

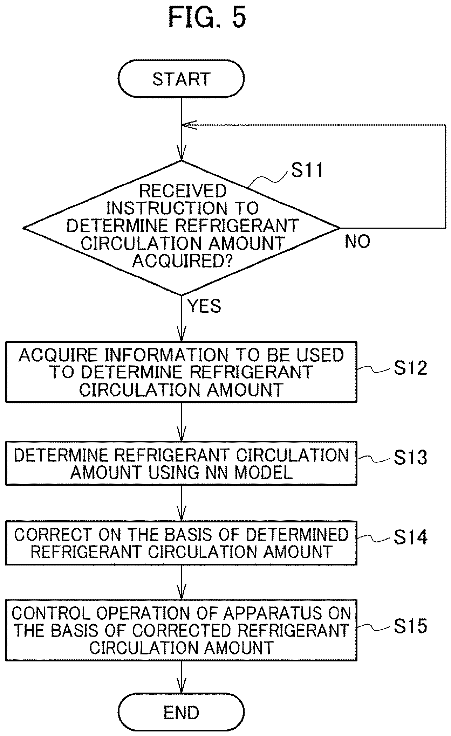

The following describes a process where the third controller 60 corrects the refrigerant circulation amount $G_2$ outputted using the NN model M on the basis of the compressor frequency Hz and the compressor intake gas specific volume v, which relate to operation of the third refrigeration cycle 50, to determine the refrigerant circulation amount $G_3$ regarding the third refrigeration cycle 50. FIG. 5 is a flowchart illustrating the flow of processing executed by the third control unit 60.

First, the third input unit 62 inputs an instruction for determining the refrigerant circulation amount $G_3$. At this time, the third input unit 62 inputs information on the compressor frequency Hz and the compressor intake gas specific volume v, which are first item input data, as explanatory variables to be given to the NN model M for determining the refrigerant circulation amount $G_3$. The third input unit 62 inputs correction target information indicating that data to be corrected when the NN model M is applied is the refrigerant circulation amount $G_2$, and information on the exclusion volume $V_2$ of the second

compressor 31 used for a correction process of the refrigerant circulation amount $G_2$.

The information inputted through the third input unit 62 is acquired by the third information acquisition unit 631. When acquiring an instruction for determining the refrigerant circulation amount $G_3$ of the third refrigeration cycle 50 ("YES" in S11), the third information acquisition unit 631 acquires, as information to be used in a determination process, information on the compressor frequency Hz and the compressor intake gas specific volume v, which are first item input data, acquired together with the instruction, information on the exclusion volume $V_2$ of the second compressor 31, and information on the exclusion volume $V_3$ of the third compressor 51 stored in the third configuration information storage unit 611 (S12).

Next, the third determination unit 632 gives the compressor frequency Hz and the compressor intake gas specific volume v, which are acquired by the third information acquisition unit 631, to the NN model M as explanatory variables. Then, the third determination unit 632 determines an objective variable outputted by using the NN model M on the basis of the given explanatory variables, as the refrigerant circulation amount $G_2$ (S13).

Next, the third correction unit multiplies, as illustrated in equation (5) below, the refrigerant circulation amount $G_2$ determined by the third determination unit 632, by the ratio of the exclusion volume $V_3$ of the third compressor 51 to the exclusion volume $V_2$ of the second compressor 31, thereby correcting the refrigerant circulation amount $G_2$ to the refrigerant circulation amount $G_3$, which corresponds to the third refrigeration cycle 50 (S14).

[Math. 4]

$$ G_3 = G_2 \times V_3 \, / \, V_2 \quad (5) $$

The third operation control unit 634 controls operation of the apparatus 51, 52, 53, or 54 in the third refrigeration cycle 50 on the basis of the refrigerant circulation amount $G_3$ corrected by the third correction unit 633, and various configuration information stored in the third configuration information storage unit 611 (S15).

According to the second embodiment described above, it is possible to properly control a first-type air conditioner that has no track record by correcting output data using an NN model already constructed for a second-type air conditioner that has a track record.

In the first and second embodiments described above, when a refrigerant circulation amount is determined using an NN model on the basis of a compressor frequency and a compressor intake gas specific volume, regarding a refrigeration cycle of an air conditioner, a process for correcting any of corresponding information has been described. However, the process is not limited thereto, and it is also possible to determine information regarding operation using the same technique for other actuators that have different operation amounts with respect to a predetermined input parameter, depending on the type of apparatus.

For example, in a refrigeration cycle of an air conditioner, it is considered that at least one of high pressure, low pressure, discharge gas temperature, intake gas temperature, inlet water temperature, outside air temperature, water flow rate, compressor frequency, or fan rotational speed is used as the first item input data, and the electronic expansion valve opening degree, fan rotational speed, refrigerant leakage determination information, failure determination information, or the like is outputted as the second item output data, using an NN model. **In** these cases, when the refrigeration cycle operates on the basis of a predetermined input parameter, by correcting any of the compressor frequency, fan rotational speed, or electronic expansion valve opening degree, which is different depending on the type of air conditioner, information regarding the air conditioner to be controlled can be determined using an NN model of an air conditioner of other existing type.

(Verification Results)

The following describes verification results of an opening degree of an electronic expansion valve under various conditions for a B-type air conditioner to be verified, using an NN model constructed for operation of an A-type air conditioner that has a track record.

FIG. 6(a) is a graph illustrating, as a set of points, positions indicating a state where the opening degree of an electronic expansion valve (predicted value of an electronic expansion valve opening degree) determined using an NN model for a type-A air conditioner, without any data correction, corresponds to the opening degree of an electronic expansion valve (measured value of an electronic expansion valve opening degree) actually measured on a type-B air conditioner, with respect to various operating conditions.

FIG. 6(b) is a graph illustrating, as a set of points, positions indicating a state where a predicted value of the electronic expansion valve opening degree determined using the NN model for the A-type air conditioner, with correction corresponding to the type-B air conditioner on any data regarding the opening degree of the electronic expansion valve as described in the above embodiments, corresponds to a measured value of the electronic expansion valve opening degree actually measured on the type-B air conditioner, with respect to various operating conditions.

In FIGS. 6(a) and 6(b), when a predicted value of the electronic expansion valve opening degree coincides with a measured value of the electronic expansion valve opening degree under a predetermined operating condition, a corresponding point is indicated at any position on a dotted line L in the graph.

In FIG. 6(a), the set of points significantly deviates from the dotted line L, while in FIG. 6(b), the set of points is concentrated at a position that approximates the dotted line L. Thus, it has been verified that the opening degree of the electronic expansion valve could be accurately determined for the type-B air conditioner using the NN model for the type-A air conditioner by correcting any data regarding the opening degree of the electronic expansion valve.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

It is also possible to construct a determination program that causes a computer to function as the first controller 20 or the third controller 60, by programming a functional configuration of the first controller 20 or the third controller 60 and incorporating it into the computer.

**Claims**

1. A determination device, comprising:

   a model information storage unit configured to store a neural network model constructed with respect to operation of a second apparatus which operates according to a same operation principle as that of a first apparatus to be controlled, the second apparatus having a type different from the first apparatus;
   an information acquisition unit configured to acquire: first item input data regarding an apparatus which operates according to the operation principle; a first coefficient for calculating second item output data from the first item input data on the first apparatus, and a second coefficient for calculating second item output data from the first item input data on the second apparatus;
   a determination unit configured to determine the second item output data regarding the first apparatus, by using the neural network model stored in the model information storage unit, on the basis of the first item input data; and
   a correction unit configured to multiply the first item input data or the second item output data, which is to be used by the determination unit, by a ratio of the first coefficient to the second coefficient, thereby correcting corresponding data.

2. The determination device according to claim 1, wherein the correction unit is configured to correct data within the first item input data or the second item output data, regarding an actuator whose operation amount for a given input parameter varies depending on an apparatus type, to be used by the determination unit.

3. The determination device according to claim 1 or 2, wherein the information acquisition unit is configured to acquire, as the first item input data, at least one of a high pressure, a low pressure, a discharge gas temperature, an intake gas temperature, an inlet water temperature, an outside air temperature, a water flow rate, a compressor frequency, or a fan rotational speed, and acquire, as the second item output data, an electronic expansion valve opening degree, the fan rotational speed, determination information on refrigerant leakage, or determination information on failure, and
the correction unit is configured to correct any one of the compressor frequency, the fan rotational speed, or the electronic expansion valve opening degree.

4. A determination method, comprising:

    storing a neural network model constructed with respect to operation of a second apparatus that operates according to a same operation principle as that of a first apparatus to be controlled, the second apparatus having a type different from the first apparatus;
    acquiring: first item input data regarding a device which operates according to the operation principle; a first coefficient for calculating second item output data from the first item input data on the first apparatus, and a second coefficient for calculating second item output data from the first item input data on the second apparatus; and
    performing correction by multiplying the first item input data by a ratio of the first coefficient to the second coefficient, and determining the second item output data regarding the first apparatus by using the neural network model on the basis of the first item input data corrected; or determining the second item output data by using the neural network model on the basis of the first item input data, and then performing correction by multiplying the second item output data determined by the ratio of the first coefficient to the second coefficient so as to correspond to the first apparatus.

5. A determination program for causing a computer to execute:

    a function for storing a neural network model constructed with respect to operation of a second apparatus which operates according to a same operation principle as that of a first apparatus to be controlled, the second apparatus having a type different from the first apparatus;
a function for acquiring: first item input data regarding an apparatus which operates according to the operation principle; a first coefficient for calculating second item output data from the first item input data on the first apparatus, and a second coefficient for calculating second item output data from the first item input data on the second apparatus; and
a function for performing correction by multiplying the first item input data by a ratio of the first coefficient to the second coefficient, and determining the second item output data regarding the first apparatus by using the neural network model on the basis of the first item input data corrected; or determining the second item output data by using the neural network model on the basis of the first item input data, and then performing correction by multiplying the second item output data determined by the ratio of the first coefficient to the second coefficient so as to correspond to the first apparatus.

# FIG. 1

FIG. 2

SECOND CONTROLLER 40

SECOND STORAGE UNIT 41

SECOND CONFIGURATION INFORMATION STORAGE UNIT 411

SECOND NN MODEL INFORMATION STORAGE UNIT 412

SECOND INPUT UNIT 42

SECOND CPU 43

SECOND INFORMATION ACQUISITION UNIT 431

SECOND DETERMINATION UNIT 432

SECOND OPERATION CONTROL UNIT 433

2

SECOND REFRIGERATION CYCLE 30

SECOND COMPRESSOR 31

SECOND CONDENSER 34

33

SECOND EVAPORATOR 32

# FIG. 3

START

S1 — RECEIVED INSTRUCTION TO DETERMINE REFRIGERANT CIRCULATION AMOUNT?

NO

YES

ACQUIRE INFORMATION TO BE USED TO DETERMINE REFRIGERANT CIRCULATION AMOUNT — S2

CORRECT COMPRESSOR FREQUENCY — S3

DETERMINE REFRIGERANT CIRCULATION AMOUNT USING NN MODEL — S4

CONTROL OPERATION OF APPARATUS ON THE BASIS OF DETERMINED REFRIGERANT CIRCULATION AMOUNT — S5

END

# FIG. 4

EP 4 542 464 A1

# FIG. 5

START

S11

RECEIVED INSTRUCTION TO DETERMINE REFRIGERANT CIRCULATION AMOUNT ACQUIRED?

NO

YES

ACQUIRE INFORMATION TO BE USED TO DETERMINE REFRIGERANT CIRCULATION AMOUNT — S12

DETERMINE REFRIGERANT CIRCULATION AMOUNT USING NN MODEL — S13

CORRECT ON THE BASIS OF DETERMINED REFRIGERANT CIRCULATION AMOUNT — S14

CONTROL OPERATION OF APPARATUS ON THE BASIS OF CORRECTED REFRIGERANT CIRCULATION AMOUNT — S15

END

EP 4 542 464 A1

# FIG. 6

(a)

MEASURED VALUE OF ELECTRONIC
EXPANSION VALVE OPENING DEGREE

L

PREDICTED VALUE OF ELECTRONIC
EXPANSION VALVE OPENING DEGREE

(b)

MEASURED VALUE OF ELECTRONIC
EXPANSION VALVE OPENING DEGREE

L

PREDICTED VALUE OF ELECTRONIC
EXPANSION VALVE OPENING DEGREE

## INTERNATIONAL SEARCH REPORT

| | International application No. |
|---|---|
| | **PCT/JP2022/024445** |

| A. | CLASSIFICATION OF SUBJECT MATTER |
|---|---|

*G06N 20/00*(2019.01)i
FI: G06N20/00

According to International Patent Classification (IPC) or to both national classification and IPC

| B. | FIELDS SEARCHED |
|---|---|

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 7-58015 A (FUJI ELECTRIC CO., LTD.) 03 March 1995 (1995-03-03) paragraphs [0002]-[0024], fig. 3, 4 | 1-5 |
| A | JP 2021-33571 A (CANON INC.) 01 March 2021 (2021-03-01) paragraphs [0026]-[0029], [0049], fig. 6 | 1-5 |
| A | JP 7060130 B1 (FUJI ELECTRIC CO., LTD.) 26 April 2022 (2022-04-26) paragraphs [0050], [0051] | 1-5 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 August 2022** | **13 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/024445**

| Patent document cited in search report | | | Publication date (day/month/year) | Patent family member(s) | Publication date (day/month/year) |
|---|---|---|---|---|---|
| JP | 7-58015 | A | 03 March 1995 | (Family: none) | |
| JP | 2021-33571 | A | 01 March 2021 | (Family: none) | |
| JP | 7060130 | B1 | 26 April 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6791429 B